# EUROPÄISCHE PATENTSCHRIFT

(11) **EP 1 319 567 B1**
(45) Veröffentlichungstag und Bekanntmachung des Hinweises auf die Patenterteilung: **02.07.2008**
(21) Anmeldenummer: 02024650.0
(22) Anmeldetag: 05.11.2002
(51) Int. Cl.: B60T 13/68, H01F 5/04, H01F 7/06

(54) **Magnetspuleneinheit**
Magnetic coil unit
Enroulement magnétique

(30) Priorität: 14.12.2001 DE 10161498
(43) Veröffentlichungstag der Anmeldung: 18.06.2003
(73) Patentinhaber: WABCO GmbH, 30453 Hannover (DE)
(72) Erfinder: Dreyer, Werner, 30826 Garbsen (DE); Kiel, Bernd, 31515 Wunstorf (DE); König, Heinz-Werner, 30890 Barsinghausen (DE); Schappler, Hartmut, 30455 Hannover (DE)
(74) Vertreter: Schrödter, Manfred

(56) Entgegenhaltungen:
- EP-A- 0 883 142
- DE-A- 19 715 568
- US-B1- 6 216 080

## Beschreibung

Die Erfindung betrifft eine Magnetspuleneinheit, insbesondere für Regelventile von elektronisch geregelten elektro-pneumatischen Bremsanlagen, gemäß Oberbegriff des Anspruchs 1.

Bei Bremsanlagen dieser Art werden die mit Magnetregelventilen ausgestatteten EBS-Modulatoren für die Bremsdruckerzeugung üblicherweise über einen CAN-Datenbus angesteuert, der vier Leitungen umfaßt, nämlich zwei Versorgungsleitungen (U_{B}⁺, GND) und zwei serielle Datenleitungen (CAN_L, CAN_H). Ein CAN-Systemstecker verbindet den CAN-Datenbus jeweils mit einem EBS-Radmodulator-Steuergerät. Zunehmend sind bei modernen Anlagen die EBS-Modulatoren als Radmodulatoren ausgeführt und bei einem derartigen EBS-Radmodulator-Steuergerät ist wegen der bereits größeren Zahl von elektrischen Steckern für Drehzahl, Verschleiß etc. am Steckerrahmen kein Platz mehr für einen weiteren Stecker, den Stecker für den CAN-Datenbus, vorhanden.

Für die Magnetregelventile sind Magnetspuleneinheiten bekannt, bei denen die elektrischen Anschlüsse der Spulen mit Steckerstiften eines elektrischen, am Spulenkörper angeordneten Anschlußsteckers, beispielsweise eines DIN-Bajonett-Anschlußsteckers, verbunden sind, über die die Spulen angesteuert werden (Wabco Redundanzventil 480 205 000 0). Ferner sind Magnetspuleneinheiten bekannt, bei denen die elektrischen Anschlüsse der Spule mit am Spulenkörper angeordneten Kontaktstiften verbunden sind, die in Kontaktbuchsen einer Platine der Steuereinheit einsteckbar sind, über die die Spulen ansteuerbar sind (Wabco Anhänger-EBS-Modulator 480 102 650 0). Es sind auch Anschlußstecker bekannt, deren Steckerstifte direkt in eine Platine eingelötet sind. Sämtliche bekannten Stecker sind speziell zur Ansteuerung von Magnetspulen oder als Versorgungsstekker an der Steuereinheit vorgesehen und geeignet.

Die Aufgabe der vorliegenden Erfindung besteht darin, unter Nutzung des vorstehend erläuterten Anschlußsteckers und der ebenfalls vorstehend erläuterten Magnetspuleinheit ohne größeren zusätzlichen baulichen Aufwand eine Anschlußmöglichkeit für einen CAN-Systemstecker zu schaffen.

Zur Lösung der Aufgabe schlägt die Erfindung vor, für eine an sich vorhandene Magnetspuleneinheit eines Magnetregelventils, beispielsweise eines EBS-Radmodulators, neben den für die Magnetbetätigung vorgesehenen Kontaktstiften, zusätzliche Kontaktstifte vorzusehen, wobei alle Kontaktstifte mit dem Steuergerät des EBS-Radmodulators verbindbar sind, und den Anschluß für den CAN-Systemstecker zu integrieren, indem der an sich vorhandene Steckeranschluß der Magnetspuleneinheit mit den zusätzlichen Kontaktstiften verbunden wird. Durch diese Ausbildung wird eine Anschlußmöglichkeit für den CAN-Datenbus geschaffen, ohne daß der Platzbedarf für weitere Stecker am Steckerrahmen der Steuereinheit erhöht wird.

Die Erfindung soll nachfolgend anhand der beigefügten Zeichnung, in der ein Ausführungsbeispiel dargestellt ist, näher erläutert werden.

Es zeigt
- Fig. 1 und 2: Magnetspuleneinheiten nach dem Stand der Technik,
- Fig. 3: eine erfindungsgemäße Magnetspuleneinheit in einer schematischen Seitenansicht,
- Fig. 4: die Magnetspuleneinheit nach Fig. 3 in einer schematischen Vorderansicht mit Blick auf einen Anschlußstecker und
- Fig. 5: eine pneumatische Schaltung der Magnetspuleneinheit.

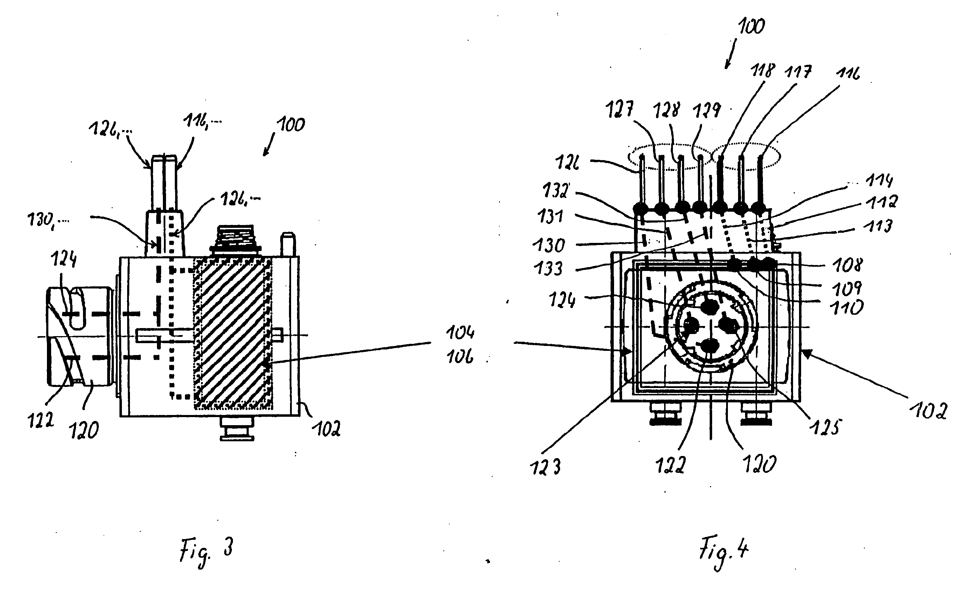

Gleiche Bauteile in den Fig. 3 bis 5 der Zeichnung sind mit den gleichen Bezugszeichen versehen.

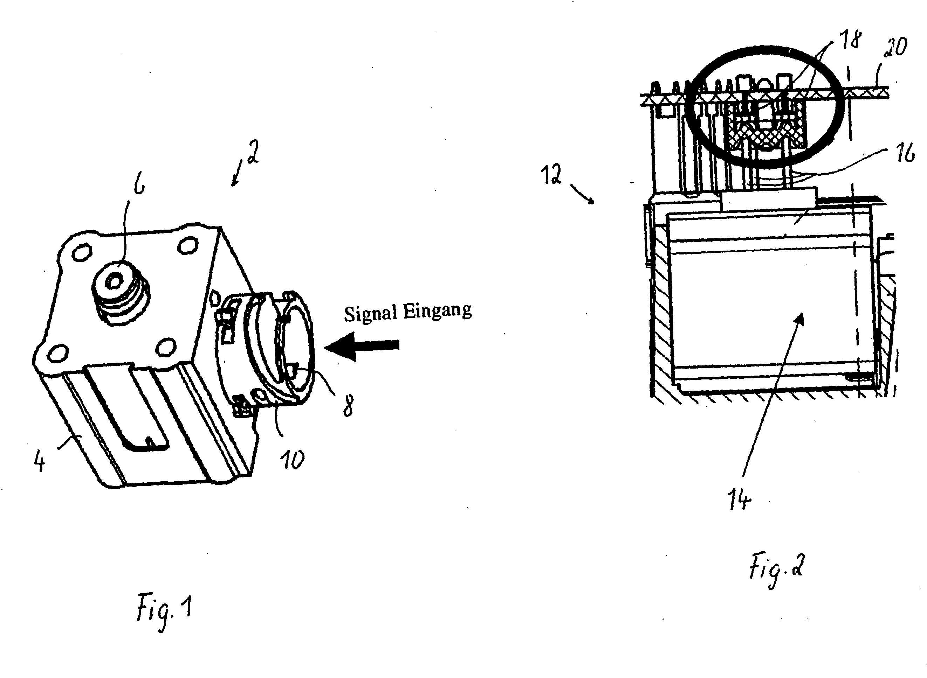

Die Fig. 1 zeigt eine bekannte Magnetspuleneinheit 2 mit einem Spulenkörper 4 und einer Spule 6, welche über Kontaktstifte 8 eines Steckers 10 angesteuert wird, der am Spulenkörper angeordnet ist.

Die Fig. 2 zeigt eine bekannte Magnetspuleneinheit 12 mit einem Spulenkörper 14, an dem Spulen-Kontaktstifte 16 angeordnet sind, die in Kontaktbuchsen 18 einer Platine 20 eines Steuergerätes eingesteckt sind und über die die Spule der Magnetspuleneinheit angesteuert wird.

Die Fig. 3 und 4 zeigen eine erfindungsgemäße Magnetspuleneinheit 100 für mit Magnetregelventilen ausgestattete, über einen CAN-Datenbus angesteuerte EBS-Radmodulator-Steuergeräte von elektronisch geregelten elektro-pneumatischen Bremsanlagen. Die Magnetspuleneinheit 100 weist einen Spulenkörper 102 und zwei Spulen 104, 106 auf. Elektrische Anschlüsse 108, 109, 110 der Spulen sind über Leitungen 112, 113, 114 mit Spulen-Kontaktstiften 116, 117, 118 verbunden. Die Kontaktstifte 116, 117, 118 sind mit einer Platine eines nicht dargestellten elektronischen Steuergerätes, beispielsweise eines EBS-Radmodulator-Steuergerätes, verbunden, vorzugsweise durch Einstecken in an der Platine fest eingelötete Kontaktbuchsen (nicht dargestellt) - analog wie bei der Magnetspuleneinheit nach Fig. 2.

Am Spulenkörper 102 sind ein Anschlußstecker 120 (beispielsweise in Form eines Bajonettsteckers) mit Steckerstiften 122, 123, 124, 125 sowie zusätzliche Kontaktstifte 126, 127, 128, 129 für einen den CAN-Datenbus mit dem EBS-Radmodulator-Steuergerät verbindenden CAN-Systemstecker angeordnet, welche mittels durch den Spulenkörper 102 durchgeleitete Leiter 130, 131, 132, 133 mit den Steckerstiften des Anschlußsteckers und ebenfalls mit der Platine eines Steuergerätes, beispielsweise eines EBS-Radmodulator-Steuergerätes, verbunden sind, vorzugsweise ebenfalls durch Einstecken in an der Platine fest eingelötete Kontaktbuchsen (nicht dargestellt) - analog wie bei der Magnetspuleneinheit nach Fig. 2.

Der Stecker 120 dient zum Anschluß der Versorgung und des CAN-Datenbusses an das Steuergerät.

Die Leiter 112, 113, 114 sowie 130, 131, 132, 133 sind vorzugsweise als Stanzgitter ausgebildet, wobei zwei separate Stanzgitter, ein Spulenstanzgitter und ein die Verbindung zwischen den Steckerstiften und den Kontaktstiften herstellendes Stanzgitter, vorgesehen sind.

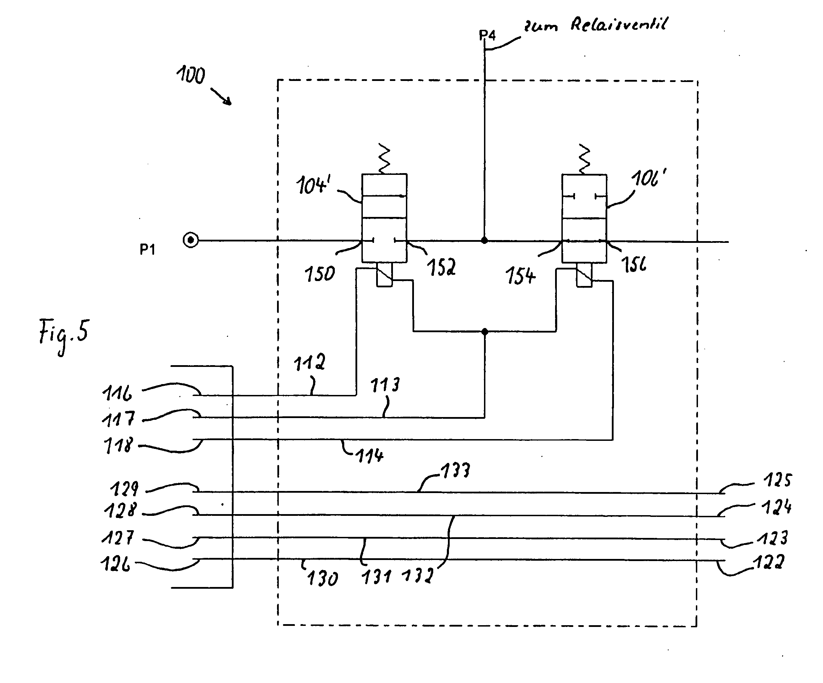

Die Fig. 5 zeigt eine pneumatische Schaltung der Magnetspuleneinheit 100 mit den beiden Magnetventilen 104' 106', die hier als 2/2-Wege-Magnetventile ausgebildet sind und die über die elektrischen Leiter 112, 113, 114 und die Kontaktstifte 116, 117, 118 von dem nicht dargestellten elektronischen Steuergerät gesteuert werden. Der pneumatische Eingang 150 des ersten Magnetventils 104' ist mit dem Versorgungsdruck P1 verbunden. Der pneumatische Ausgang 152 des ersten Magnetventils ist mit dem Eingang eines nicht dargestellten Relaisventils (Ausgangsdruck P4) und mit dem pneumatischen Eingang 154 des zweiten Magnetventils 106' verbunden. Der pneumatische Ausgang des Relaisventils ist mit den ebenfalls nicht dargestellten Bremszylindern verbunden. Der pneumatische Ausgang 156 des zweiten Magnetventils 106' ist mit einer Drucksenke (Entlüftung) verbunden.

Die Fig. 5 zeigt die pneumatische Schaltung im Zustand "Fahren", in dem die Ventilmagnete des ersten und zweiten Magnetventils 104', 106' erregt sind, wobei das erste Magnetventil 104' gesperrt ist und das zweite Magnetventil 106' offen ist, so daß der Bremszylinderdruck ins Freie entlüftet wird. Zum Druckaufbau in den Bremszylindern wird der am Eingang 150 des ersten stromlos offenen Magnetventils 104' anstehende Druck über den Ausgang 152 zu den Bremszylindern durchgesteuert und wird das zweite Magnetventil 106' gesperrt. Zum Druckhalten wird der Ventilmagnet des ersten Magnetventils 104' erregt, wodurch dieses Ventil geschlossen und der am Eingang anstehende Druck vom Ausgang abgesperrt wird.

Die Bezugszeichen 122, 123, 124, 125 bezeichnen die Steckerstifte des Anschlußsteckers 120, die über die als Stanzgitter ausgebildeten Leiter 130, 131, 132, 133 mit den Kontaktstiften 126, 127, 128, 129 verbunden sind, welche in die Platinen-Kontaktbuchsen einsteckbar sind.

## Patentansprüche

1. Magnetspuleneinheit, insbesondere für mit Magnetregelventilen ausgestattete, über einen CAN-Datenbus angesteuerte EBS-Radmodulator-Steuergeräte von elektronisch geregelten elektro-pneumatischen Bremsanlagen, mit wenigstens einer in einem Spulenkörper (102) angeordneten Spule (104, 106) mit elektrischen Anschlüssen und mit einem am Spulenkörper angeordneten elektrischen Anschlußstecker (120) mit mehreren Steckerstiften (122, 123, 124, 125), **dadurch gekennzeichnet, daß** die elektrischen Anschlüsse (108, 109, 110) der Spule (104, 106) mit am Spulenkörper (102) angeordneten Spulen-Kontaktstiften (116, 117, 118) verbunden sind, über die die Spule angesteuert wird, und die Steckerstifte (122, 123, 124, 125) des Anschlußsteckers (120) mit zusätzlichen am Spulenkörper (102) angeordneten Kontaktstiften (126, 127, 128, 129) für einen den CAN-Datenbus mit dem EBS-Radmodulator-Steuergerät verbindenden CAN-Systemstecker verbunden sind.

2. Magnetspuleneinheit nach Anspruch 1, **dadurch gekennzeichnet, daß** die Spulen-Kontaktstifte (116, 117, 118) und die mit den Steckerstiften (122, 123, 124, 125) verbundenen zusätzlichen Kontaktstifte (126, 127, 128, 129) mit einer elektronischen Steuereinheit, insbesondere dem EBS-Radmodulator-Steuergerät der elektro-pneumatischen Bremsanlage, verbindbar sind.

3. Magnetspuleneinheit nach Anspruch 1 oder 2, **dadurch gekennzeichnet, daß** die Kontaktstifte (126, 127, 128, 129) über durch den Spulenkörper (102) durchgeleitete Leiter mit den Steckerstiften (122, 123, 124, 125) des Anschlußsteckers (120) verbunden sind.

4. Magnetspuleneinheit nach Anspruch 1, **dadurch gekennzeichnet, daß** der elektrische Anschlußstecker (120) ein DIN-Bajonett-Anschlußstecker ist.

5. Magnetspuleneinheit nach einem der vorhergehenden Ansprüche, **dadurch gekennzeichnet, daß** der elektrische Anschlußstecker (120) als Versorgungsanschluß und Anschluß für den CAN-Datenbus vorgesehen ist.

6. Magnetspuleneinheit nach einem der vorhergehenden Ansprüche, **dadurch gekennzeichnet, daß** die zu den Kontaktstiften (126, 127, 128, 129) führenden Leitungen (112, 113, 114, 130, 131, 132, 133) als Stanzgitter ausgebildet sind.

7. Magnetspuleneinheit nach Anspruch 6, **dadurch gekennzeichnet, daß** zwei separate Stanzgitter, ein Stanzgitter für die Magnetspulen (104, 106) und ein Stanzgitter für die Verbindung der Steckerstifte (122, 123, 124, 125) mit den Kontaktstiften (126, 127, 128, 129) vorgesehen sind.

8. Magnetspuleneinheit nach einem der vorhergehenden Ansprüche mit folgenden Merkmalen:
a) ein pneumatischer Eingang (150) des einen Magnetventils (104') ist mit dem Versorgungsdruck (P1) verbunden,
b) ein pneumatischer Ausgang (152) des ersten Magnetventils (104') ist mit einem Relaisventil und mit einem pneumatischen Eingang (154) des zweiten Magnetventils (106') verbunden,
c) ein pneumatischer Ausgang (156) des zweiten Magnetventils (106) ist mit einer Drucksenke (Entlüftung) verbunden,
d) elektrische Steuerleitungen (130, 131, 132, 133) verbinden die Magnetspulen (104,106) der Magnetventile (104', 106') mit einem elektronischen Steuergerät,
e) elektrische Signal- und Versorgungsleitungen (138, 140, 142) verbinden den CAN-Datenbus mit dem Steuergerät,
f) dem elektronischen Steuergerät wird eingangseitig eine vom Fahrer initiierte elektrische Bremsvorgabe zugeführt.

9. Magnetspuleneinheit nach Anspruch 8, **dadurch gekennzeichnet, daß**
a) zum Druckaufbau in den Bremszylindern das erste Magnetventil (104') durch Entregung in die Offenstellung und das zweite Magnetventil (106') durch Entregung in die Sperrstellung gesteuert werden,
b) zum Druckabbau der Bremse das erste Magnetventil (104') durch Erregung in die Sperrstellung und das zweite Magnetventil (106') durch Erregung in die Offenstellung gesteuert werden und
c) zum Druckhalten das erste Magnetventil durch Erregen in die Sperrstellung und das zweite Magnetventil durch Entregung in die Sperrstellung gesteuert werden.

## Claims

1. Solenoid coil unit, especially for EBS wheel modulator control devices of electronically controlled electro-pneumatic braking systems, which control devices are provided with solenoid control valves and controlled by way of a CAN data bus, having at least one coil (104, 106) having electrical connections, which coil is arranged in a coil body (102), and having, arranged on the coil body, an electrical connection plug (120) having a plurality of plug pins (122, 123, 124, 125), **characterised in that** the electrical connections (108, 109, 110) of the coil (104, 106) are connected to coil contact pins (116, 117, 118) arranged on the coil body (102), by way of which pins the coil is driven; and the plug pins (122, 123, 124, 125) of the connection plug (120) are connected to additional contact pins (126, 127, 128, 129) arranged on the coil body (102) for a CAN system plug connecting the CAN data bus to the EBS wheel modulator control device.

2. Solenoid coil unit according to claim 1, **characterised in that** the coil contact pins (116, 117, 118) and the additional contact pins (126, 127, 128, 129) connected to the plug pins (122, 123, 124, 125) are arranged for connection to an electronic control unit, especially the EBS wheel modulator control device of the electro-pneumatic braking system.

3. Solenoid coil unit according to claim 1 or 2, **characterised in that** the contact pins (126, 127, 128, 129) are connected to the plug pins (122, 123, 124, 125) of the connection plug (120) by way of conductors passing through the coil body (102).

4. Solenoid coil unit according to claim 1, **characterised in that** the electrical connection plug (120) is a DIN bayonet connection plug.

5. Solenoid coil unit according to one of the preceding claims, **characterised in that** the electrical connection plug (120) is provided as a supply connection and connection for the CAN data bus.

6. Solenoid coil unit according to one of the preceding claims, **characterised in that** the lines (112, 113, 114, 130, 131, 132, 133) leading to the contact pins (126, 127, 128, 129) are arranged as lead frames.

7. Solenoid coil unit according to claim 6, **characterised in that** two separate lead frames - one lead frame for the solenoid coils (104, 106) and one lead frame for connecting the plug pins (122, 123, 124, 125) to the contact pins (126, 127, 128, 129) - are provided.

8. Solenoid coil unit according to one of the preceding claims, having the following features:
a) a pneumatic input (150) of a first solenoid valve (104') is connected to the supply pressure (P1),
b) a pneumatic output (152) of the first solenoid valve (104') is connected to a relay valve and to a pneumatic input (154) of the second solenoid valve (106'),
c) a pneumatic output (156) of the second solenoid valve (106) is connected to a pressure sink (vent),
d) electrical control lines (130, 131, 132, 133) connect the solenoid coils (104, 106) of the solenoid valves (104', 106') to an electronic control device,
e) electrical signal and supply lines (138, 140, 142) connect the CAN data bus to the control device,
f) the electronic control device is supplied, on the input side, with an electrical braking instruction initiated by the driver.

9. Solenoid coil unit according to claim 8, **characterised in that**,
a) for building up pressure in the brake cylinders, the first solenoid valve (104') is set to the open position by de-energisation and the second solenoid valve (106') is set to the closed position by de-energisation,
b) for reducing brake pressure, the first solenoid valve (104') is set to the closed position by energisation and the second solenoid valve (106') is set to the open position by energisation, and
c) for maintaining pressure, the first solenoid valve is set to the closed position by energisation and the second solenoid valve is set to the closed position by de-energisation.

## Revendications

1. Unité de bobine magnétique, en particulier pour des dispositifs de commande de modulateur EBS commandés par un bus de données CAN et équipés d'électrovannes de réglage de systèmes de freinage électropneumatiques réglés électroniquement, comportant au moins une bobine (104, 106) disposée dans un corps de bobine (102) avec des raccords électriques et avec une fiche de raccordement électrique (120) disposée dans le corps de bobine comportant plusieurs broches (122, 123, 124, 125), **caractérisée en ce que** les raccords électriques (108, 109, 110) de la bobine (104, 106) sont reliés aux broches de contact de bobine (116, 117, 118) disposées dans le corps de bobine (102), par l'intermédiaire desquelles la bobine est commandée, et les broches (122, 123, 124, 125) de la fiche de raccordement (120) sont reliées aux broches de contact (126, 127, 128, 129) disposées en plus dans le corps de bobine (102) pour un connecteur de système CAN reliant le bus de données CAN au dispositif de commande de modulateur EBS.

2. Unité de bobine magnétique selon la revendication 1, **caractérisée en ce que** les broches de contact de bobine (116, 117, 118) et les broches de contact supplémentaires (126, 127, 128, 129) reliées aux broches (122, 123, 124, 125) peuvent être reliées à une unité de commande électronique, en particulier le dispositif de commande de modulateur EBS du système de freinage électropneumatique.

3. Unité de bobine magnétique selon la revendication 1 ou 2, **caractérisée en ce que** les broches de contact (126, 127, 128, 129) sont reliées aux broches (122, 123, 124, 125) de la fiche de raccordement (120) par l'intermédiaire de conducteurs traversant le corps de bobine (102).

4. Unité de bobine magnétique selon la revendication 1, **caractérisée en ce que** la fiche de raccordement électrique (120) est une fiche de raccordement à baïonnette DIN.

5. Unité de bobine magnétique selon l'une des revendications précédentes, **caractérisée en ce que** la fiche de raccordement électrique (120) est prévue en tant que raccord d'alimentation et raccord pour le bus de données CAN.

6. Unité de bobine magnétique selon l'une des revendications précédentes, **caractérisée en ce que** les lignes (112, 113, 114, 130, 131, 132, 133) conduisant aux broches de contact (126, 127, 128, 129) sont réalisées sous la forme d'un grillage estampé.

7. Unité de bobine magnétique selon la revendication 6, **caractérisée en ce que** deux grillages estampés distincts, un grillage estampé pour les bobines magnétiques (104, 106) et un grillage estampé pour la connexion des broches (122, 123, 124, 125) sont munis des broches de contact (126, 127, 128, 129).

8. Unité de bobine magnétique selon l'une des revendications précédentes comportant les caractéristiques suivantes :
a) une entrée pneumatique (150) d'une électrovanne (104') est reliée à la pression d'alimentation (P1),
b) une sortie pneumatique (152) de la première électrovanne (104') est reliée à une soupape relais et à une entrée pneumatique (154) de la seconde électrovanne (106'),
c) une sortie pneumatique (156) de la seconde électrovanne (106) est reliée à un puits de pression (purge),
d) des lignes de commande électriques (130, 131, 132, 133) relient les bobines magnétiques (104, 106) des électrovannes (104', 106') à un dispositif de commande électronique,
e) des lignes signal et d'alimentation électrique (138, 140, 142) relient le bus de données CAN au dispositif de commande,
f) une indication de freinage électrique initiée par le conducteur est délivrée côté entrée au dispositif de commande électronique.

9. Unité de bobine magnétique selon la revendication 8, **caractérisée en ce que**
a) pour une augmentation de pression dans les cylindres de freinage, la première électrovanne (104') est commandée par désexcitation dans la position ouverte et la seconde électrovanne (106') est commandée par désexcitation dans la position fermée,
b) pour une chute de pression des freins, la première électrovanne (104') est commandée par excitation dans la position fermée et la seconde électrovanne (106') est commandée par excitation dans la position ouverte et
c) pour le maintien de la pression, la première électrovanne est commandée par excitation dans la position fermée et la seconde électrovanne est commandée par désexcitation dans la position fermée.
